# EUROPEAN PATENT APPLICATION

(11) **EP 4 287 717 A1**
(43) Date of publication of application: **06.12.2023**
(21) Application number: 21927331.5
(22) Date of filing: 27.02.2021
(51) Int. Cl.: H04W 52/02

(54) **WIRELESS FIDELITY (WIFI) COMMUNICATION METHOD AND APPARATUS**

(71) Applicant: Huawei Technologies Co., Ltd., Shenzhen, Guangdong 518129 (CN)
(72) Inventor: WANG, Zhenzhong, Shenzhen, Guangdong 518129 (CN)
(74) Representative: Pfenning, Meinig & Partner mbB
(86) International application number: PCT/CN2021/078342
(87) International publication number: WO 2022/178896

(57) **Abstract**

This application provides a wireless fidelity Wi-Fi communication method and apparatus, and relates to the field of communication technologies, to reduce power consumption generated by a Wi-Fi hotspot of a terminal device. The method includes: An access point enables a Wi-Fi hotspot. The access point selectively enables a Wi-Fi low power consumption mode. In response to enabling the Wi-Fi low power consumption mode, the access point periodically broadcasts a low power consumption indication frame. The low power consumption indication frame carries a low power consumption parameter, and the low power consumption parameter indicates at least one discontinuous time period in which the access point is in a sleep state after entering the Wi-Fi low power consumption mode. In this way, the access point can reduce power consumption generated by the Wi-Fi hotspot of the access point by enabling the Wi-Fi low power consumption mode.

## Description

### TECHNICAL FIELD

This application relates to the field of communication technologies, and in particular, to a communication method and apparatus.

### BACKGROUND

At present, mobile phones commonly support a wireless fidelity (wireless fidelity, Wi-Fi) hotspot function. After the mobile phone (denoted as an access point) enables the Wi-Fi hotspot function, another device (denoted as a terminal device) supporting network access via Wi-Fi may access a network device by using a Wi-Fi hotspot enabled by the access point.

A process in which the terminal device sends data to the network device by using the Wi-Fi hotspot is specifically as follows: The terminal device sends the data to the access point by using the Wi-Fi hotspot; and the access point forwards the data to the network device after receiving the data.

Because the terminal device may send the data by using the Wi-Fi hotspot at any time, the access point needs to keep the Wi-Fi hotspot enabled all the time, to receive the data from the terminal device at any time. However, if the access point keeps the Wi-Fi hotspot in an enabled state all the time, large power consumption is generated.

### SUMMARY

This application provides a wireless fidelity Wi-Fi communication method and apparatus, to resolve a problem in a conventional technology that a Wi-Fi hotspot generates large power consumption after an access point enables the Wi-Fi hotspot.

To resolve the foregoing problem, the following technical solutions are used in this application.

According to a first aspect, a wireless fidelity Wi-Fi communication method is provided. The method includes: An access point enables a Wi-Fi hotspot. The access point selectively enables a Wi-Fi low power consumption mode. In response to enabling the Wi-Fi low power consumption mode, the access point periodically broadcasts a low power consumption indication frame. The low power consumption indication frame carries a low power consumption parameter, and the low power consumption parameter indicates at least one discontinuous time period in which the access point is in a sleep state after entering the Wi-Fi low power consumption mode.

Based on the foregoing technical solution, the access point periodically broadcasts the low power consumption indication frame. This can greatly increase a probability that the terminal device receives the low power consumption indication frame, to reduce a case in which a data packet is lost because the terminal device cannot receive the low power consumption indication frame and sends data to the access point when the Wi-Fi hotspot of the access point is in the sleep state.

In addition, generally, a plurality of time periods in which the Wi-Fi hotspot of the access point is in the sleep state do not frequently change. Even if the terminal device receives no low power consumption indication frame in a current periodicity, the terminal device may determine, based on the low power consumption indication frame received in a previous periodicity, the plurality of time periods in which the Wi-Fi hotspot of the access point is in the sleep state. In this way, a probability that the data packet of the terminal device is lost is further reduced.

With reference to the first aspect, in a possible implementation, the method further includes: The access point selectively enables the Wi-Fi low power consumption mode based on information about a terminal device that accesses the Wi-Fi hotspot.

With reference to the first aspect, in a possible implementation, the method further includes: When at least one terminal device accesses the Wi-Fi hotspot, the access point determines whether the at least one terminal device supports the Wi-Fi low power consumption mode; and the access point enables the Wi-Fi low power consumption mode if the one or more terminal devices all support the Wi-Fi low power consumption mode.

Based on this, the access point selectively enables the Wi-Fi low power consumption mode based on the information about the terminal device. When all terminal devices that access the Wi-Fi hotspot support the Wi-Fi low power consumption mode, the access point enables the Wi-Fi low power consumption mode. This can reduce power consumption generated by the Wi-Fi hotspot of the access point. If a case in which the terminal device does not support the Wi-Fi low power consumption mode exists, the access point does not enable the Wi-Fi low power consumption mode. This can avoid a case in which data sent by the terminal device cannot be received by the access point.

With reference to the first aspect, in a possible implementation, the method further includes: The access point determines whether a low power consumption support frame from each of the at least one terminal device is received, where the low power consumption support frame represents that the terminal device supports the Wi-Fi low power consumption mode; and if the low power consumption support frame from each of the at least one terminal device is received, the access point determines that the at least one terminal device supports the Wi-Fi low power consumption mode; or if the low power consumption support frame from each of the at least one terminal device is not received, the access point determines that the at least one terminal device includes a terminal device that does not support the Wi-Fi low power consumption mode.

Based on this, the terminal device may send the low power consumption support frame to the access point, to indicate to the access point that the terminal device supports the Wi-Fi low power consumption mode. The access point may determine, based on whether the low power consumption support frame of each terminal device is received, whether the access point supports the Wi-Fi low power consumption mode.

With reference to the first aspect, in a possible implementation, the method further includes: The access point enables the Wi-Fi low power consumption mode when the access point is in a state in which the Wi-Fi hotspot is enabled and no terminal device accesses the Wi-Fi hotspot.

Based on this, the access point enables the Wi-Fi low power consumption mode when no terminal device accesses the Wi-Fi hotspot, to reduce power consumption generated by the Wi-Fi hotspot.

With reference to the first aspect, in a possible implementation, the method further includes: after the access point enables the Wi-Fi hotspot, if the access point receives no access request from the terminal device, determining that the access point is in the state in which the Wi-Fi hotspot is enabled and no terminal device accesses the Wi-Fi hotspot.

With reference to the first aspect, in a possible implementation, the method further includes: after one or more terminal devices that access the Wi-Fi hotspot are all disconnected from the Wi-Fi hotspot, determining that the access point is in the state in which the Wi-Fi hotspot is enabled and no terminal device accesses the Wi-Fi hotspot.

Based on this, the access point may determine to enable the Wi-Fi hotspot when the Wi-Fi hotspot is just enabled and no terminal device accesses the Wi-Fi hotspot, and when all terminal devices that access the Wi-Fi hotspot are disconnected from the Wi-Fi hotspot.

With reference to the first aspect, in a possible implementation, the method further includes: The access point generates forcible enabling information indicating to forcibly enable the Wi-Fi low power consumption mode; and in response to the forcible enabling information, the access point enables the Wi-Fi low power consumption mode.

Based on this, the access point may forcibly enable the Wi-Fi low power consumption mode after determining the forcible enabling information. This is applicable to a scenario in which power consumption of the Wi-Fi hotspot of the access point needs to be preferentially reduced.

With reference to the first aspect, in a possible implementation, the method further includes: The access point receives a Wi-Fi hotspot access request from a terminal device that does not access the Wi-Fi hotspot; and in response to the Wi-Fi hotspot access request, the access point disables the Wi-Fi low power consumption mode.

Based on this, the access point disables the Wi-Fi low power consumption mode when the terminal device requests to access the Wi-Fi hotspot. In this way, the access point is in a receiving state all the time in a process in which the terminal device accesses the Wi-Fi hotspot, to improve a success rate of accessing the Wi-Fi hotspot by the terminal device.

With reference to the first aspect, in a possible implementation, duration of a plurality of discontinuous time periods is determined based on an amount of data transmitted between the access point and the terminal device in a preset time period.

Based on this, the access point may indicate a plurality of long and discontinuous time periods when a data transmission amount of the Wi-Fi hotspot is large, to ensure a data transmission rate and a data transmission delay.

The access point may indicate a plurality of short and discontinuous time periods when the data transmission amount of the Wi-Fi hotspot is small, to reduce power consumption of the Wi-Fi hotspot of the access point.

With reference to the first aspect, in a possible implementation, the method further includes: In response to enabling the Wi-Fi low power consumption mode, the access point displays a first identifier on a user interface, where the first identifier represents that the Wi-Fi low power consumption mode has been enabled.

Based on this, the access point may display the first identifier to indicate to a user that the access point has enabled the Wi-Fi low power consumption mode.

With reference to the first aspect, in a possible implementation, the first identifier includes a first icon and a second icon, the first icon is a Wi-Fi hotspot icon, and the second icon is a Wi-Fi low power consumption mode icon.

Based on this, the access point may add the Wi-Fi low power consumption mode icon to the Wi-Fi hotspot icon to represent that the access point has enabled the Wi-Fi low power consumption mode.

With reference to the first aspect, in a possible implementation, the method further includes: The access point disables the Wi-Fi low power consumption mode.

Based on this, the access point may disable the Wi-Fi low power consumption mode to ensure normal running of the Wi-Fi hotspot.

With reference to the first aspect, in a possible implementation, the method further includes: When the Wi-Fi low power consumption mode is disabled, the access point displays a second identifier, where the second identifier represents that the Wi-Fi low power consumption mode has been disabled.

Based on this, the access point may display the second identifier to indicate to the user that the access point has disabled the Wi-Fi low power consumption mode.

With reference to the first aspect, in a possible implementation, the second identifier includes the first icon, and the first icon is the Wi-Fi hotspot icon.

According to a second aspect, a communication method is provided. The method includes: A terminal device sends a low power consumption support frame to an access point, where the low power consumption support frame represents that the terminal device supports a Wi-Fi low power consumption mode, and the access point is an access point that enables a Wi-Fi hotspot.

The terminal device receives a low power consumption indication frame periodically broadcast by the access point, where the low power consumption indication frame carries a low power consumption parameter, and the low power consumption parameter indicates at least one discontinuous time period in which the access point is in a sleep state after entering the Wi-Fi low power consumption mode.

The terminal device sends data to the access point by using the Wi-Fi hotspot in a time period other than the at least one discontinuous time period.

Based on the foregoing technical solution, the terminal device sends the low power consumption support frame to the access point to indicate that the terminal device supports the Wi-Fi low power consumption mode. After the access point enables the Wi-Fi low power consumption mode, the terminal device does not send the data to the access point when the Wi-Fi hotspot of the access point is in the sleep state, and the terminal device determines to send the data to the access point in a time period other than a time period in which the access point is in the sleep state. This can avoid a loss of a data packet of the terminal device caused because the data sent by the terminal device cannot be received by the access point.

With reference to the second aspect, in a possible implementation, the method further includes: The terminal device sends a Wi-Fi hotspot access request to the access point.

According to a third aspect, a Wi-Fi communication apparatus is provided. The apparatus includes a Wi-Fi chip processor and a Wi-Fi chip transceiver, where the Wi-Fi chip processor is configured to enable a Wi-Fi hotspot.

The Wi-Fi chip processor is further configured to selectively enable a Wi-Fi low power consumption mode.

The Wi-Fi chip processor is further configured to: in response to enabling the Wi-Fi low power consumption mode, indicate the Wi-Fi chip transceiver to periodically broadcast a low power consumption indication frame, where the low power consumption indication frame carries a low power consumption parameter, and the low power consumption parameter indicates at least one discontinuous time period in which an access point is in a sleep state after entering the Wi-Fi low power consumption mode.

With reference to the third aspect, in a possible implementation, the Wi-Fi chip processor is specifically configured to selectively enable the Wi-Fi low power consumption mode based on information about a terminal device that accesses the Wi-Fi hotspot.

With reference to the third aspect, in a possible implementation, the Wi-Fi chip processor is specifically configured to: when at least one terminal device accesses the Wi-Fi hotspot, determine whether the at least one terminal device supports the Wi-Fi low power consumption mode; and enable the Wi-Fi low power consumption mode if the one or more terminal devices all support the Wi-Fi low power consumption mode.

With reference to the third aspect, in a possible implementation, the Wi-Fi chip processor is specifically configured to: determine whether a low power consumption support frame from each of the at least one terminal device is received, where the low power consumption support frame represents that the terminal device supports the Wi-Fi low power consumption mode; and if the low power consumption support frame from each of the at least one terminal device is received, determine that the at least one terminal device supports the Wi-Fi low power consumption mode; or if the low power consumption support frame from each of the at least one terminal device is not received, determine that the at least one terminal device includes a terminal device that does not support the Wi-Fi low power consumption mode.

With reference to the third aspect, in a possible implementation, the Wi-Fi chip processor is specifically configured to enable the Wi-Fi low power consumption mode when the Wi-Fi communication apparatus is in a state in which the Wi-Fi hotspot is enabled and no terminal device accesses the Wi-Fi hotspot.

With reference to the third aspect, in a possible implementation, the Wi-Fi chip processor is further configured to: after the Wi-Fi hotspot is enabled, if no access request is received from the terminal device, determine that the Wi-Fi communication apparatus is in the state in which the Wi-Fi hotspot is enabled and no terminal device accesses the Wi-Fi hotspot.

With reference to the third aspect, in a possible implementation, the Wi-Fi chip processor is further configured to: after one or more terminal devices that access the Wi-Fi hotspot are all disconnected from the Wi-Fi hotspot, determine that the Wi-Fi communication apparatus is in the state in which the Wi-Fi hotspot is enabled and no terminal device accesses the Wi-Fi hotspot.

With reference to the third aspect, in a possible implementation, the Wi-Fi chip processor is further configured to: obtain forcible enabling information that is generated by the Wi-Fi communication apparatus and that indicates to forcibly enable the Wi-Fi low power consumption mode; and in response to the forcible enabling information, enable the Wi-Fi low power consumption mode.

With reference to the third aspect, in a possible implementation, the Wi-Fi chip processor is further configured to: receive a Wi-Fi hotspot access request from a terminal device that does not access the Wi-Fi hotspot; and in response to the Wi-Fi hotspot access request, disable the Wi-Fi low power consumption mode.

With reference to the third aspect, in a possible implementation, duration of a plurality of discontinuous time periods is determined based on an amount of data transmitted between the access point and the terminal device in a preset time period.

With reference to the third aspect, in a possible implementation, the apparatus further includes a system on chip SOC chip processor and an SOC chip transceiver.

The SOC chip transceiver is configured to receive Wi-Fi low power consumption mode enabling information.

The SOC chip processor is configured to: in response to enabling the Wi-Fi low power consumption mode, display a first identifier on a user interface, where the first identifier represents that the Wi-Fi low power consumption mode has been enabled.

With reference to the third aspect, in a possible implementation, the first identifier includes a first icon and a second icon, the first icon is a Wi-Fi hotspot icon, and the second icon is a Wi-Fi low power consumption mode icon.

With reference to the third aspect, in a possible implementation, the Wi-Fi chip processor is further configured to disable the Wi-Fi low power consumption mode.

With reference to the third aspect, in a possible implementation, the SOC chip processor is further configured to: when the Wi-Fi low power consumption mode is disabled, display a second identifier on the user interface, where the second identifier represents that the Wi-Fi low power consumption mode has been disabled.

With reference to the third aspect, in a possible implementation, the second identifier includes the first icon, and the first icon is the Wi-Fi hotspot icon.

According to a fourth aspect, a communication apparatus is provided. The apparatus includes a transceiver and a processor. The transceiver is configured to send a low power consumption mode indication frame to an access point, where the low power consumption mode indication frame indicates that a terminal device supports a Wi-Fi low power consumption mode, and the access point is an access point that enables a Wi-Fi hotspot.

The transceiver is further configured to receive a low power consumption indication frame periodically broadcast by the access point, where the low power consumption indication frame carries a low power consumption parameter, and the low power consumption parameter indicates at least one discontinuous time period in which the access point is in a sleep state after entering the Wi-Fi low power consumption mode.

The processor is configured to send data to the access point by using the Wi-Fi hotspot in a time period other than the at least one discontinuous time period.

With reference to the fourth aspect, in a possible implementation, the transceiver is further configured to:
send a Wi-Fi hotspot access request to the access point.

According to a fifth aspect, a Wi-Fi communication apparatus is provided. The apparatus includes a Wi-Fi chip processing unit and a Wi-Fi chip communication unit, where the Wi-Fi chip processing unit is configured to enable a Wi-Fi hotspot.

The Wi-Fi chip processing unit is further configured to selectively enable a Wi-Fi low power consumption mode.

The Wi-Fi chip processing unit is further configured to: in response to enabling the Wi-Fi low power consumption mode, indicate the Wi-Fi chip communication unit to periodically broadcast a low power consumption indication frame, where the low power consumption indication frame carries a low power consumption parameter, and the low power consumption parameter indicates at least one discontinuous time period in which an access point is in a sleep state after entering the Wi-Fi low power consumption mode.

With reference to the fifth aspect, in a possible implementation, the Wi-Fi chip processing unit is specifically configured to selectively enable the Wi-Fi low power consumption mode based on information about a terminal device that accesses the Wi-Fi hotspot.

With reference to the fifth aspect, in a possible implementation, the Wi-Fi chip processing unit is specifically configured to: when at least one terminal device accesses the Wi-Fi hotspot, determine whether the at least one terminal device supports the Wi-Fi low power consumption mode; and enable the Wi-Fi low power consumption mode if the one or more terminal devices all support the Wi-Fi low power consumption mode.

With reference to the fifth aspect, in a possible implementation, the Wi-Fi chip processing unit is specifically configured to: determine whether a low power consumption support frame from each of the at least one terminal device is received, where the low power consumption support frame represents that the terminal device supports the Wi-Fi low power consumption mode; and if the low power consumption support frame from each of the at least one terminal device is received, determine that the at least one terminal device supports the Wi-Fi low power consumption mode; or if the low power consumption support frame from each of the at least one terminal device is not received, determine that the at least one terminal device includes a terminal device that does not support the Wi-Fi low power consumption mode.

With reference to the fifth aspect, in a possible implementation, the Wi-Fi chip processing unit is specifically configured to enable the Wi-Fi low power consumption mode when the Wi-Fi communication apparatus is in a state in which the Wi-Fi hotspot is enabled and no terminal device accesses the Wi-Fi hotspot.

With reference to the fifth aspect, in a possible implementation, the Wi-Fi chip processing unit is further configured to: after the Wi-Fi hotspot is enabled, if no access request is received from the terminal device, determine that the Wi-Fi communication apparatus is in the state in which the Wi-Fi hotspot is enabled and no terminal device accesses the Wi-Fi hotspot.

With reference to the fifth aspect, in a possible implementation, the Wi-Fi chip processing unit is further configured to: after one or more terminal devices that access the Wi-Fi hotspot are all disconnected from the Wi-Fi hotspot, determine that the Wi-Fi communication apparatus is in the state in which the Wi-Fi hotspot is enabled and no terminal device accesses the Wi-Fi hotspot.

With reference to the fifth aspect, in a possible implementation, the Wi-Fi chip processing unit is further configured to: obtain forcible enabling information that is generated by the Wi-Fi communication apparatus and that indicates to forcibly enable the Wi-Fi low power consumption mode; and in response to the forcible enabling information, enable the Wi-Fi low power consumption mode.

With reference to the fifth aspect, in a possible implementation, the Wi-Fi chip processing unit is further configured to: receive a Wi-Fi hotspot access request from a terminal device that does not access the Wi-Fi hotspot; and in response to the Wi-Fi hotspot access request, disable the Wi-Fi low power consumption mode.

With reference to the fifth aspect, in a possible implementation, duration of a plurality of discontinuous time periods is determined based on an amount of data transmitted between the access point and the terminal device in a preset time period.

With reference to the fifth aspect, in a possible implementation, the apparatus further includes a system on chip SOC chip processing unit and an SOC chip communication unit.

The SOC chip communication unit is configured to receive Wi-Fi low power consumption mode enabling information.

The SOC chip processing unit is configured to: in response to enabling the Wi-Fi low power consumption mode, display a first identifier on a user interface, where the first identifier represents that the Wi-Fi low power consumption mode has been enabled.

With reference to the fifth aspect, in a possible implementation, the first identifier includes a first icon and a second icon, the first icon is a Wi-Fi hotspot icon, and the second icon is a Wi-Fi low power consumption mode icon.

With reference to the fifth aspect, in a possible implementation, the Wi-Fi chip processing unit is further configured to disable the Wi-Fi low power consumption mode.

With reference to the fifth aspect, in a possible implementation, the SOC chip processing unit is further configured to: when the Wi-Fi low power consumption mode is disabled, display a second identifier on the user interface, where the second identifier represents that the Wi-Fi low power consumption mode has been disabled.

With reference to the fifth aspect, in a possible implementation, the second identifier includes the first icon, and the first icon is the Wi-Fi hotspot icon.

According to a sixth aspect, a communication apparatus is provided. The apparatus includes a transceiver and a processor. The transceiver is configured to send a low power consumption mode indication frame to an access point, where the low power consumption mode indication frame indicates that a terminal device supports a Wi-Fi low power consumption mode, and the access point is an access point that enables a Wi-Fi hotspot.

The transceiver is further configured to receive a low power consumption indication frame periodically broadcast by the access point, where the low power consumption indication frame carries a low power consumption parameter, and the low power consumption parameter indicates at least one discontinuous time period in which the access point is in a sleep state after entering the Wi-Fi low power consumption mode.

The processor is configured to send data to the access point by using the Wi-Fi hotspot in a time period other than the at least one discontinuous time period.

With reference to the sixth aspect, in a possible implementation, the transceiver is further configured to:
send a Wi-Fi hotspot access request to the access point.

According to a seventh aspect, this application provides a computer-readable storage medium. The computer-readable storage medium includes a computer program or instructions. When the computer program or the instructions is/are run on a computer, the computer is enabled to perform the method in any one of the first aspect and the possible implementations of the first aspect.

According to an eighth aspect, this application provides a computer-readable storage medium. The computer-readable storage medium includes a computer program or instructions. When the computer program or the instructions is/are run on a computer, the computer is enabled to perform the method in any one of the second aspect and the possible implementations of the second aspect.

According to a ninth aspect, this application provides a computer program product including instructions. When the computer program product runs on a computer, the computer is enabled to perform the method in any one of the first aspect and the possible implementations of the first aspect.

According to a tenth aspect, this application provides a computer program product including instructions. When the computer program product runs on a computer, the computer is enabled to perform the method in any one of the second aspect and the possible implementations of the second aspect.

According to an eleventh aspect, this application provides a communication system, including a first communication apparatus and a second communication apparatus. The first communication apparatus is configured to perform the method in any one of the first aspect or the possible implementations of the first aspect. The second communication apparatus is configured to perform the method in any one of the second aspect or the possible implementations of the second aspect.

It should be understood that, descriptions of technical features, technical solutions, beneficial effects, or similar words in this application do not imply that all features and advantages can be implemented in any individual embodiment. On the contrary, it may be understood that, the descriptions of the features or the beneficial effects mean that at least one embodiment includes a specific technical feature, technical solution, or beneficial effect. Therefore, the descriptions of the technical features, the technical solutions, or the beneficial effects in this specification may not necessarily be specific to a same embodiment. Further, the technical features, the technical solutions, and the beneficial effects described in embodiments may be combined in any proper manner. A person skilled in the art may understand that an embodiment may be implemented without one or more specific technical features or technical solutions, or beneficial effects in a specific embodiment. In other embodiments, additional technical features and beneficial effects may be identified in a specific embodiment that does not reflect all embodiments.

### BRIEF DESCRIPTION OF DRAWINGS

FIG. 1 is a diagram of a system architecture of a communication system according to an embodiment of this application;
FIG. 2 shows a method for reducing power consumption of a Wi-Fi hotspot by an access point according to an embodiment of this application;
FIG. 3 is a schematic flowchart of a communication method according to an embodiment of this application;
FIG. 4 is a diagram of interaction between an access point and a terminal device in a Wi-Fi low power consumption mode according to an embodiment of this application;
FIG. 5 is a schematic flowchart of another communication method according to an embodiment of this application;
FIG. 6 is a schematic diagram of a first identifier according to an embodiment of this application;
FIG. 7 is interface diagrams of displaying a first identifier by an access point according to an embodiment of this application;
FIG. 8 is a schematic diagram of a second identifier according to an embodiment of this application;
FIG. 9 is interface diagrams of displaying a second identifier by an access point according to an embodiment of this application;
FIG. 10 is a schematic diagram of a structure of a communication apparatus according to an embodiment of this application; and
FIG. 11 is a schematic diagram of a hardware structure of a communication apparatus according to an embodiment of this application; and
FIG. 12 is a schematic diagram of a hardware structure of a communication apparatus according to an embodiment of this application;
FIG. 13 is a schematic diagram of a hardware structure of a terminal device according to an embodiment of this application; and
FIG. 14 is a schematic diagram of a hardware structure of a network device according to an embodiment of this application.

### DESCRIPTION OF EMBODIMENTS

In descriptions of this application, unless otherwise specified, "/" means "or". For example, A/B may indicate A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of means two or more. Terms such as "first" and "second" do not limit a quantity and an execution sequence, and the terms such as "first" and "second" do not indicate a definite difference.

It should be noted that, in this application, terms such as "example" or "for example" are used to represent giving an example, an illustration, or a description. Any embodiment or design scheme described as an "example" or "for example" in this application should not be explained as being more preferred or having more advantages than another embodiment or design scheme. Exactly, use of the terms such as "example" or "for example" is intended to present a related concept in a specific manner.

A communication system in embodiments of this application includes but is not limited to a long term evolution (long term evolution, LTE) system, a 5th-generation (5th-generation, 5G) system, a new radio (new radio, NR) system, a wireless local area network (wireless local area network, WLAN) system, a future evolved system, or a plurality of converged communication systems. A 4G system may also be referred to as an evolved packet system (evolved packet system, EPS). A core network of the 4G system may be referred to as an evolved packet core (evolved packet core, EPC), and an access network may be referred to as long term evolution (long term evolution, LTE). A core network of the 5G system may be referred to as a 5GC (5G core), and an access network may be referred to as new radio (new radio, NR). For ease of description, this application is described below by using an example in which this application is applied to the 5G system. However, it may be understood that this application is also applicable to the 4G system, a 3rd generation (3rd Generation, 3G) system, and the like. This is not limited. For example, a method provided in embodiments of this application may be specifically applied to an evolved-universal terrestrial radio access network (evolved-universal terrestrial radio access network, E-UTRAN) and a next generation-radio access network (next generation-radio access network, NG-RAN) system.

A terminal device in embodiments of this application is a user-side entity configured to receive a signal, send a signal, or receive a signal and send a signal. The terminal device is configured to provide one or more of a voice service and a data connectivity service for a user. The terminal device may also be referred to as user equipment (user equipment, UE), a terminal, an access terminal, a subscriber unit, a subscriber station, a mobile station, a remote station, a remote terminal, a mobile device, a user terminal, a wireless communication device, a user agent, or a user apparatus. The terminal device may be a vehicle-to-everything (vehicle-to-everything, V2X) device, for example, a smart car (smart car or intelligent car), a digital car (digital car), an unmanned car (unmanned car, driverless car, pilotless car, or automobile), a self-driving car (self-driving car or autonomous car), a pure electric vehicle (pure EV or Battery EV), a hybrid electric vehicle (hybrid electric vehicle, HEV), a range extended electric vehicle (range extended EV, REEV), a plug-in hybrid electric vehicle (plug-in HEV, PHEV), or a new energy vehicle (new energy vehicle). Alternatively, the terminal device may be a device-to-device (device-to-device, D2D) device, for example, an electricity meter or a water meter. Alternatively, the terminal device may be a mobile station (mobile station, MS), a subscriber unit (subscriber unit), an uncrewed aerial vehicle, an internet of things (internet of things, IoT) device, a station (station, ST) in a WLAN, a cellular phone (cellular phone), a smartphone (smartphone), a cordless phone, a wireless data card, a tablet computer, a session initiation protocol (session initiation protocol, SIP) phone, a wireless local loop (wireless local loop, WLL) station, a personal digital assistant (personal digital assistant, PDA) device, a laptop computer (laptop computer), a machine type communication (machine type communication, MTC) terminal, a handheld device having a wireless communication function, a computing device or another processing device connected to a wireless modem, a vehicle-mounted device, or a wearable device (which may also be referred to as a wearable intelligent device). Alternatively, the terminal device may be a terminal device in a next-generation communication system, for example, a terminal device in a 5G system, a terminal device in a future evolved PLMN, or a terminal device in an NR system.

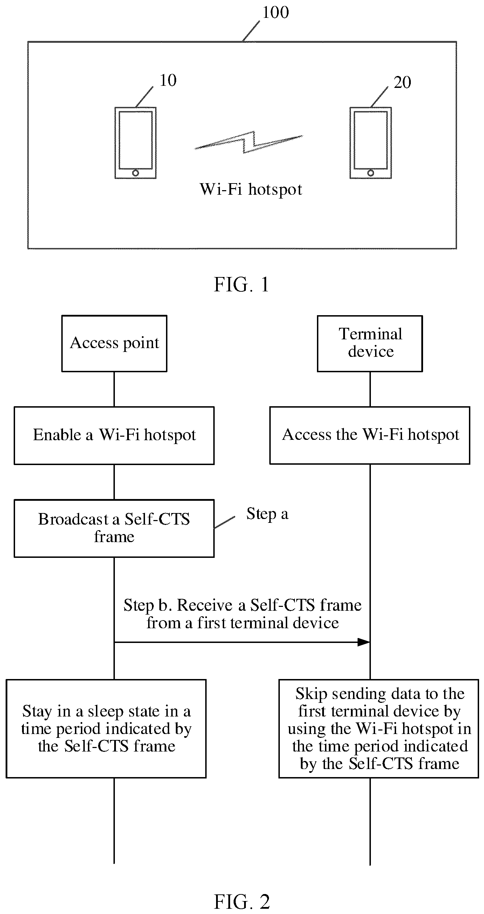

As shown in FIG. 1, a communication method provided in embodiments of this application may be applied to a communication system 100 shown in FIG. 1. As shown in FIG. 1, the communication system 100 includes an access point 10 and one or more terminal devices 20. The access point 10 and the terminal device 20 are in a communication connection through a wireless link of a Wi-Fi hotspot.

The access point 10 is configured to: enable the Wi-Fi hotspot, and receive data sent by the terminal device 20 by using the Wi-Fi hotspot. The access point 10 may be further configured to forward, to a network device, the data sent by the terminal device 20 by using the Wi-Fi hotspot. In addition, the access point 10 may further receive data from the network device, and send the data to the terminal device 20 by using the Wi-Fi hotspot.

The terminal device 20 is configured to: establish a communication connection to the access point 10 by using the Wi-Fi hotspot, and send the data to the access point 10 by using the Wi-Fi hotspot, or receive the data from the access point 10 by using the Wi-Fi hotspot.

The foregoing briefly describes an application scenario of this application.

Currently, with a reduction of mobile data traffic pricing, a user uses a terminal device (denoted as an access point) to enable a Wi-Fi hotspot to share data traffic with another terminal device (denoted as a terminal device) in more scenarios.

For example, the user uses a mobile phone to enable a Wi-Fi hotspot to provide data traffic for another wireless network access device such as a mobile phone or a notebook computer, and the another wireless network access device such as a mobile phone or a notebook computer may access a network by using the data traffic of the mobile phone that enables the Wi-Fi hotspot.

After the access point enables the Wi-Fi hotspot, time at which the terminal device accesses the access point by using the Wi-Fi hotspot and time at which the terminal device sends data to the access point by using the Wi-Fi hotspot are not fixed. In this case, the access point cannot determine the time at which the terminal device accesses the access point by using the Wi-Fi hotspot or the time at which the terminal device sends the data to the access point by using the Wi-Fi hotspot.

Therefore, the access point needs to continuously detect, on a wireless channel of the Wi-Fi hotspot, whether data sent by the terminal device to the access point by using the Wi-Fi hotspot exists, to avoid a case in which the data sent by the terminal device is lost because the access point does not receive the data sent by the terminal device in time. When the access point is in a state of detecting data on the wireless channel of the Wi-Fi hotspot all the time, power consumption generated by the access point is greatly increased.

Currently, to reduce power consumption generated after the access point enables the Wi-Fi hotspot, a method for reducing power consumption of the Wi-Fi hotspot is provided. As shown in FIG. 2, the method includes the following steps.

Step a. An access point broadcasts a Self-clear to send (clear to send, CTS) frame.

In a possible implementation, after the access point enables a Wi-Fi hotspot, the access point generates the Self-CTS frame under a specific condition (for example, an amount of data that is sent by a terminal device by using the Wi-Fi hotspot and that is received within preset duration is less than a preset data amount). Then, the access point broadcasts the Self-CTS frame.

The Self-CTS frame carries network allocation vector (network allocation vector, NAV) indication information.

The NAV indication information indicates a target time period. Within the target time period, the Wi-Fi hotspot of the access point enters a sleep state. The terminal device that receives the Self-CTS frame does not send data to the access point by using the Wi-Fi hotspot in the target time period.

That the Wi-Fi hotspot of the access point enters the sleep state means that the access point does not detect data on a wireless channel of the Wi-Fi hotspot. In this state, power consumption generated by the Wi-Fi hotspot of the access point is greatly reduced.

Step b. The terminal device receives the Self-CTS frame from the access point.

Specifically, after receiving the Self-CTS frame from the access point, the terminal device determines, based on the NAV indication information in a first Self-CTS frame, sleep time of the Wi-Fi hotspot of the access point. Within the time period, the terminal device does not send data to the access point by using the Wi-Fi hotspot.

In the foregoing method, the access point may indicate, by sending the Self-CTS frame to the terminal device, time at which the Wi-Fi hotspot of the access point enters the sleep state. In this way, the access point may indicate, within the time period, the Wi-Fi hotspot to enter the sleep state, to reduce power consumption generated by the Wi-Fi hotspot of the access point. In addition, the access point broadcasts the Self-CTS frame, to enable the terminal device to determine, after receiving the Self-CTS frame, the time at which the Wi-Fi hotspot of the access point enters the sleep state. Within the time, the terminal device does not send data to the access point by using the Wi-Fi hotspot.

However, the foregoing method has the following problems:
1. The Self-CTS frame is transmitted on a public wireless channel of the Wi-Fi hotspot. In this case, the Self-CTS frame may be received by another terminal device that accesses a Wi-Fi hotspot of another access point. The another access point is a device that enables a Wi-Fi hotspot other than the access point. The another terminal device is a terminal device that accesses the Wi-Fi hotspot of the another access point.

When the another access point is close to the access point, the access point and the another access point may share a public wireless channel. If the access point and the another access point share the public wireless channel, the Self-CTS frame sent by the access point on the public wireless channel by using the Wi-Fi hotspot may be received by the another terminal device. After the another terminal device receives the Self-CTS frame, the another terminal device does not send data to the another access point in the time period indicated by the Self-CTS frame. Consequently, data cannot be transmitted between the another access point that can normally transmit data by using the Wi-Fi hotspot and the another terminal device by using the Wi-Fi hotspot.

2. After the access point broadcasts the Self-CTS frame, the access point cannot determine whether each terminal device receives the Self-CTS frame. If there is a terminal device that receives no Self-CTS frame, the terminal device may still send data to the access point by using the Wi-Fi hotspot within the time period indicated by the Self-CTS frame. However, within the time period, the access point has indicated the Wi-Fi hotspot to enter the sleep state, and the access point cannot receive, by using the Wi-Fi hotspot, the data sent by the terminal device. As a result, a data packet sent by the terminal device is lost.

In a use scenario of the Wi-Fi hotspot, the wireless channel used by the Wi-Fi hotspot is extremely vulnerable to interference, and there is a high probability that the Self-CTS frame is not received by the terminal device. In this case, the foregoing method causes a high probability that the data packet of the terminal device is lost.

Based on the foregoing problems, this application provides a communication method. The method includes: An access point periodically broadcasts a low power consumption indication frame after the access point enables a Wi-Fi low power consumption mode. The low power consumption indication frame indicates a plurality of time periods in which a Wi-Fi hotspot of the access point is in a sleep state.

The access point periodically broadcasts the low power consumption indication frame. This can greatly increase a probability that a terminal device receives the low power consumption indication frame, reduces a probability that the terminal device sends data to the access point when the Wi-Fi hotspot of the access point is in the sleep state, and reduces a case in which a data packet sent by the terminal device to the access point is lost.

In addition, the plurality of time periods in which the Wi-Fi hotspot of the access point is in the sleep state do not frequently change. Even if the terminal device receives no low power consumption indication frame in a current periodicity, the terminal device may determine, based on the low power consumption indication frame received in a previous periodicity, the plurality of time periods in which the Wi-Fi hotspot of the access point is in the sleep state. In this way, a probability that the data packet of the terminal device is lost is further reduced.

In addition, in this application, the access point and the terminal device may be further associated. An associated terminal device may identify the low power consumption indication frame, and a terminal device that is not associated with the access point cannot identify a low power consumption support frame.

In view of this, even if another terminal device receives the low power consumption indication frame, because the another terminal device is not associated with the access point and cannot identify the low power consumption indication frame, the another terminal device does not send data only in a time period other than the time period indicated by the low power consumption indication frame. This ensures that the another terminal device can still normally use a Wi-Fi hotspot of the another access point.

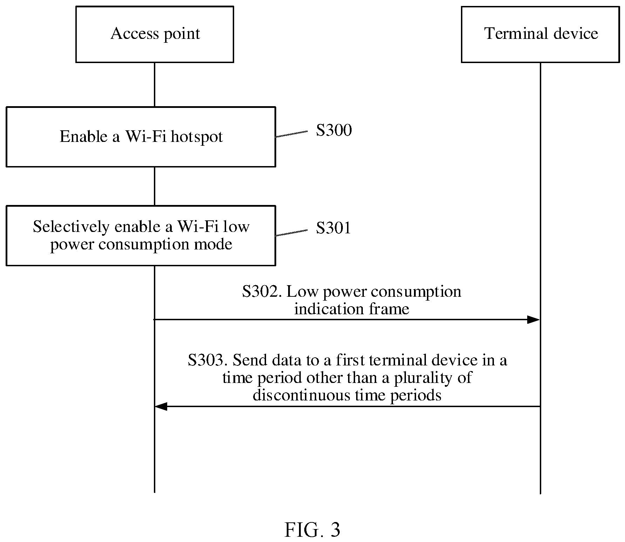

The method provided in embodiments of this application may be applied to the communication system shown in FIG. 1. As shown in FIG. 3, the communication method includes the following steps.

S300. An access point enables a Wi-Fi hotspot.

The Wi-Fi hotspot is used by the access point to communicate with a terminal device.

S301. The access point selectively enables a Wi-Fi low power consumption mode.

In the Wi-Fi low power consumption mode, the Wi-Fi hotspot of the access point is in a sleep state in a plurality of discontinuous time periods. When the Wi-Fi hotspot is in the sleep state, the access point does not receive data from the terminal device by using the Wi-Fi hotspot.

In a possible implementation, after enabling Wi-Fi, the access point determines whether a current condition meets a condition for enabling the Wi-Fi low power consumption mode.

If the current condition meets the condition for enabling the Wi-Fi low power consumption mode, the access point selects to enable the Wi-Fi low power consumption mode.

If the current condition does not meet the condition for enabling the Wi-Fi low power consumption mode, the access point selects not to enable the Wi-Fi low power consumption mode.

S302. In response to enabling the Wi-Fi low power consumption mode, the access point periodically broadcasts a low power consumption indication frame. Correspondingly, the terminal device receives the low power consumption indication frame from the access point.

The low power consumption indication frame carries a low power consumption parameter, and the low power consumption parameter indicates at least one discontinuous time period in which the access point is in a sleep state after entering the Wi-Fi low power consumption mode.

In a possible implementation, the low power consumption indication frame is carried in a Beacon frame broadcast by the access point. The Beacon frame is a management frame that is specified in a Wi-Fi protocol and that needs to be periodically sent by the access point. In this case, a periodicity in which the access point broadcasts the low power consumption indication frame is a periodicity in which the access point sends the Beacon frame.

It should be noted that duration of the plurality of discontinuous time periods relates to an amount of data transmitted between the access point and the terminal device.

Specifically, when a large amount of data is transmitted between the access point and the terminal device, and duration of the plurality of discontinuous time periods is short, a large quantity of time may be used to transmit data between the access point and the terminal device by using the Wi-Fi hotspot, to meet a requirement of transmitting data between the access point and the terminal device by using the Wi-Fi hotspot.

When a small amount of data is transmitted between the access point and the terminal device, and duration of the plurality of discontinuous time periods is short, a small quantity of time may be used to transmit data between the access point and the terminal device by using the Wi-Fi hotspot, to reduce power consumption generated by the Wi-Fi hotspot of the access point.

S303. The terminal device determines a time period other than the plurality of discontinuous time periods, and sends data to the access point.

In a possible implementation, after the terminal device receives the Beacon frame broadcast by the access point, the terminal device parses the Beacon frame, and determines the low power consumption indication frame carried in the Beacon frame information. The terminal device determines the plurality of discontinuous time periods in which the Wi-Fi hotspot of the access point is in the sleep state and that are indicated by the low power consumption indication frame.

The terminal device does not send the data to the access point by using the Wi-Fi hotspot in the plurality of discontinuous time periods, to avoid a data packet loss.

In the time period other than the plurality of discontinuous time periods, the Wi-Fi hotspot of the access point works normally. The terminal device normally sends the data to the access point by using the Wi-Fi hotspot in the time other than the plurality of discontinuous time periods.

Based on the foregoing technical solution, the access point periodically broadcasts the low power consumption indication frame. This can greatly increase a probability that the terminal device receives the low power consumption indication frame, reduces a probability that the terminal device sends the data to the access point when the Wi-Fi hotspot of the access point is in the sleep state, and reduces a case in which a data packet sent by the terminal device to the access point is lost.

In addition, the plurality of time periods in which the Wi-Fi hotspot of the access point is in the sleep state do not frequently change. Even if the terminal device receives no low power consumption indication frame in a current periodicity, the terminal device may determine, based on the low power consumption indication frame received in a previous periodicity, the plurality of time periods in which the Wi-Fi hotspot of the access point is in the sleep state. In this way, a probability that the data packet of the terminal device is lost is further reduced.

It should be noted that, in this embodiment of this application, the access point may selectively enable the Wi-Fi low power consumption mode based on the following three scenarios: Scenario a: The access point selectively enables the Wi-Fi low power consumption mode based on information about a terminal device that accesses the Wi-Fi hotspot; Scenario b: The access point selectively enables the Wi-Fi low power consumption mode based on a quantity of terminal devices that access the Wi-Fi hotspot; and Scenario c: The access point selectively enables the Wi-Fi low power consumption mode based on whether forcible enabling information is generated.

The following separately describes Scenario a, Scenario b, and Scenario c in detail.

Scenario a: The access point selectively enables the Wi-Fi low power consumption mode based on the information about the terminal device that accesses the Wi-Fi hotspot.

In a possible implementation, the information about the terminal device includes whether the terminal device supports the Wi-Fi low power consumption mode.

Correspondingly, the access point selects to enable the Wi-Fi low power consumption mode when each terminal device that accesses the Wi-Fi hotspot supports the Wi-Fi low power consumption mode.

The access point selects not to enable the Wi-Fi low power consumption mode when a terminal device that does not support the Wi-Fi low power consumption mode exists in the terminal device that accesses the Wi-Fi hotspot.

Optionally, the access point may determine, based on whether a low power consumption support frame from the terminal device is received, whether the terminal device supports the Wi-Fi low power consumption mode. The low power consumption support frame indicates that the terminal device supports the Wi-Fi low power consumption mode.

Specifically, when the access point receives the low power consumption support frame sent by each terminal device, the access point determines that each terminal device supports the Wi-Fi low power consumption mode. In this case, the access point enables the Wi-Fi low power consumption mode.

When the access point does not receive the low power consumption support frame sent by each terminal device, the access point determines that there is a terminal device that does not support the Wi-Fi low power consumption mode. In this case, the access point does not enable the Wi-Fi low power consumption mode.

In a possible implementation, the low power consumption support frame is carried in an access request Associate Request frame sent by the terminal device to the access point. The Associate Request frame is a frame sent by the terminal device to the access point when the terminal device accesses the Wi-Fi hotspot of the access point.

That the terminal device supports low power consumption of the Wi-Fi hotspot means that the terminal device can identify the low power consumption indication frame sent by the access point, and determine the time periods in which the Wi-Fi hotspot of the access point is in the sleep state and that are indicated by the low power consumption indication frame. In these time periods, the terminal device does not send data to the access point by using the Wi-Fi hotspot. In the time period other than these time periods, the terminal device may send data to the access point by using the Wi-Fi hotspot.

It should be noted that, in Scenario a, if the terminal device does not send the low power consumption support frame to the access point, it indicates that the terminal device does not support the Wi-Fi low power consumption mode. After receiving the low power consumption indication frame, the terminal device cannot identify content of the low power consumption indication frame. In this case, the terminal device cannot determine time at which the Wi-Fi hotspot of the access point enters the sleep state. In this case, even if the Wi-Fi hotspot of the access point enters the sleep state, the terminal device may still send data to the access point by using the Wi-Fi hotspot. This causes a loss of the data packet sent by the terminal device.

Therefore, in Scenario a, the access point can enable the Wi-Fi low power consumption mode only when receiving the low power consumption support frame from each terminal device. If there is any terminal device that does not send the low power consumption support frame to the access point, the access point does not enable the Wi-Fi low power consumption mode.

For example, in Scenario a, there are three terminal devices that access the Wi-Fi hotspot of the access point, which are respectively a terminal device #1, a terminal device #2, and a terminal device #3. The terminal device #1 and the terminal device #2 are terminal devices that support the Wi-Fi low power consumption mode, and the terminal device #3 is a terminal device that does not support the Wi-Fi low power consumption mode.

In a process in which the terminal device #1 and the terminal device #2 access the Wi-Fi hotspot of the access point, Associate Request frames sent by the terminal device #1 and the terminal device #2 to the access point carry the low power consumption support frame. Therefore, the access point determines that the terminal device #1 and the terminal device #2 support the Wi-Fi low power consumption mode.

In a process in which the terminal device #3 accesses the Wi-Fi hotspot of the access point, an Associate Request frame sent by the terminal device #3 to the access point does not carry the low power consumption support frame. Therefore, the access point determines that the terminal device #3 does not support the Wi-Fi low power consumption mode.

In this case, the access point determines not to enable the Wi-Fi low power consumption mode.

Scenario b: The access point selectively enables the Wi-Fi low power consumption mode based on the quantity of terminal devices that access the Wi-Fi hotspot.

In an example, the access point enables the Wi-Fi low power consumption mode when no terminal device communicates with the access point by using the Wi-Fi hotspot.

When there is a terminal device that communicates with the access point by using the Wi-Fi hotspot, the access point determines, based on the method recorded in Scenario a, whether to enable the Wi-Fi low power consumption mode.

A scenario in which no terminal device communicates with the access point by using the Wi-Fi hotspot includes at least one of the following:

The access point just enables the Wi-Fi hotspot, and the terminal device has not accessed the Wi-Fi hotspot of the access point.

All terminal devices that access the Wi-Fi hotspot of the access point are disconnected from the Wi-Fi hotspot of the access point.

Specifically, after the access point enables the Wi-Fi hotspot, if the access point receives no access request from the terminal device, the access point determines that the access point is in a state in which the Wi-Fi hotspot is enabled and no terminal device accesses the Wi-Fi hotspot.

Alternatively, after one or more terminal devices that access the Wi-Fi hotspot are all disconnected from the Wi-Fi hotspot, the access point determines that the access point is in the state in which the Wi-Fi hotspot is enabled and no terminal device accesses the Wi-Fi hotspot.

In Scenario b, no terminal device communicates with the access point by using the Wi-Fi hotspot, and the access point does not need to receive data from the terminal device by using the Wi-Fi hotspot. In this case, the access point may enable the Wi-Fi low power consumption mode to reduce power consumption of the Wi-Fi hotspot of the access point.

Scenario c: The access point selectively enables the Wi-Fi low power consumption mode based on whether the forcible enabling information is generated.

The forcible enabling information indicates the access point to forcibly enable the Wi-Fi low power consumption mode.

Specifically, with reference to Scenario a and Scenario b, it may be determined that the access point may determine, based on whether all terminal devices support the Wi-Fi low power consumption mode or based on the quantity of terminal devices that access the Wi-Fi hotspot, whether to enable the Wi-Fi low power consumption mode.

However, in some cases, even if a use condition of the Wi-Fi hotspot does not meet the condition recorded in Scenario a or Scenario b, the access point still needs to enable the Wi-Fi low power consumption mode to reduce power consumption generated by the Wi-Fi hotspot.

For example, the access point enables a power saving mode. In this case, the access point forcibly enables the Wi-Fi low power consumption mode to reduce power consumption generated by the Wi-Fi hotspot.

For another example, a user sends, to the access point, an instruction used to forcibly enable a low power consumption mode of the Wi-Fi hotspot. In this case, the access point needs to forcibly enable the Wi-Fi low power consumption mode.

In these cases, the access point generates the forcible enabling information, and enables the Wi-Fi low power consumption mode based on the forcible enabling information.

It should be noted that, the access point may generate the forcible enabling information by using a TCP layer/an IP layer and a layer above the TCP/IP layer, and then send the forcible enabling information to a Wi-Fi chip, and the Wi-Fi chip enables the Wi-Fi low power consumption mode.

Based on the foregoing technical solutions, this application provides three scenarios in which the access point needs to enable the Wi-Fi low power consumption mode. Based on Scenario a and Scenario b, the access point may enable the Wi-Fi low power consumption mode in case of losing the data packet sent by the terminal device, to reduce power consumption generated by the Wi-Fi hotspot of the access point. Based on Scenario c, the access point may forcibly enable the Wi-Fi low power consumption mode. In some scenarios, it may be preferentially ensured that power consumption generated by the Wi-Fi hotspot of the access point is reduced.

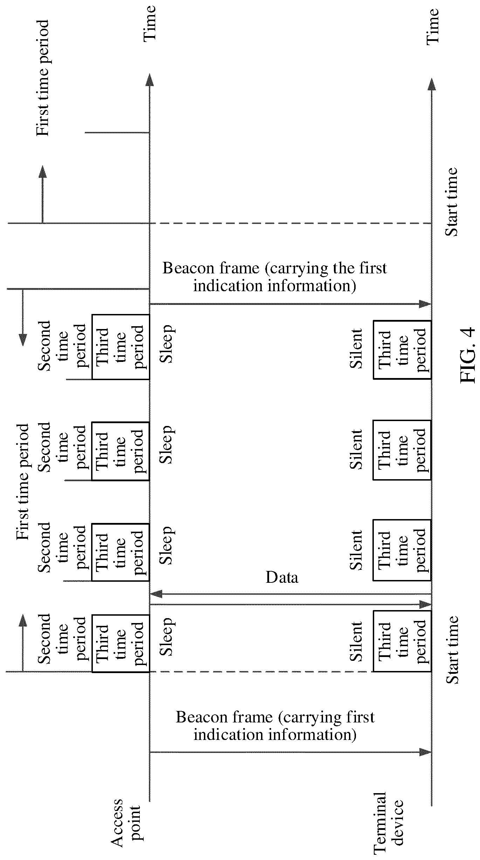

In a possible implementation of S300, as shown in FIG. 4, the low power consumption indication frame broadcast by the access point indicates a plurality of discontinuous time periods in which the Wi-Fi hotspot of the access point is in the sleep state in a first time period.

The access point divides the first time period that needs to be indicated into a plurality of continuous second time periods, and further determines a third time period from each second time period. The third time period is one of the plurality of discontinuous time periods in which the Wi-Fi hotspot of the access point is in the sleep state.

The low power consumption indication frame separately indicates start time of the first time period, a quantity of second time periods included in the first time period, duration of each second time period, and duration of the third time period in each second time period.

The second time period included in the first time period is a continuous time period, and a sum of duration of the second time period included in the first time period is equal to duration of the first time period. The third time period is a discontinuous time period, and start time of the third time period is the same as start time of the second time period.

In an example, the Beacon frame carrying the low power consumption indication frame includes at least one of the following fields: a Count field, a Duration field, an Interval field, and a Start Time field. The following describes the foregoing four fields in detail with reference to Table 1.

**Table 1**

| Field Name | **Size (Byte)** | Description |
|---|---|---|
| Count | 1 | Indicates a quantity of Interval repetitions, and may alternatively be understood as a quantity of sleep periodicities of the access point, and when a value of the field is 255, it indicates that the Interval is repeated forever. |
| Duration | 4 | Indicates duration of absence of the hotspot in one Interval, and is expressed in milliseconds. |
| Interval | 4 | Indicates duration of one Interval, and is expressed in milliseconds. |
| Start Time | 4 | Start time at which the access point enables the Wi-Fi low power consumption mode, and is represented by TSF timing time of the hotspot (STA needs to be synchronized with TSF time of the hotspot by using the Beacon frame). |

Specifically, the Interval field indicates the duration of the second time period shown in FIG. 4, the Duration field indicates the duration of the third time period shown in FIG. 4, the Count field indicates the quantity of second time periods included in one first time period, and the Start Time field indicates the start time of the first time period.

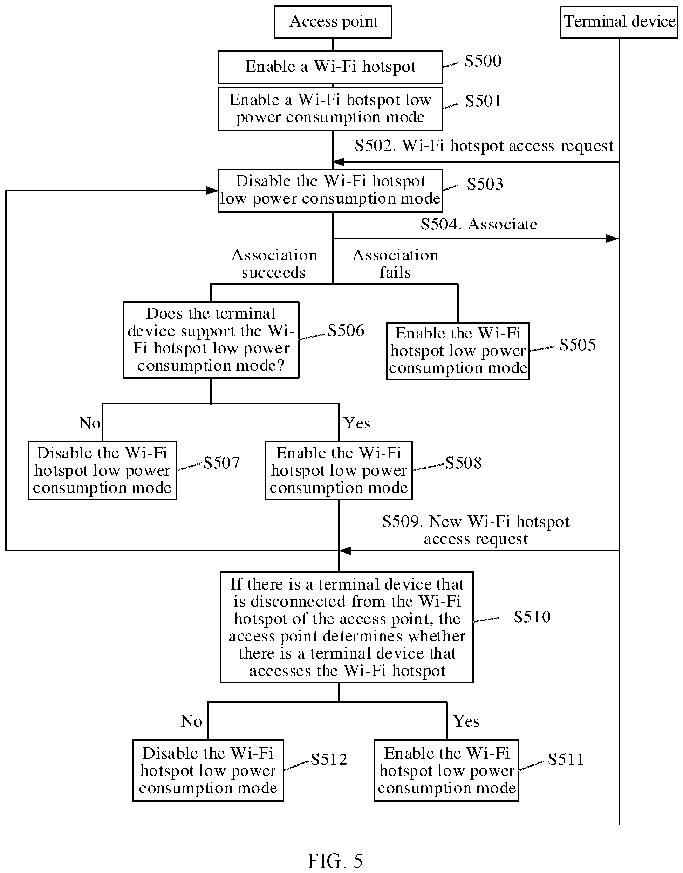

In a possible implementation, as shown in FIG. 5, after the access point enables the Wi-Fi hotspot, that the access point determines whether to enable the Wi-Fi low power consumption mode includes the following S500 to S512. Detailed descriptions are as follows:

S500. An access point enables a Wi-Fi hotspot.

S501. The access point enables a Wi-Fi low power consumption mode.

It should be noted that after the access point enables the Wi-Fi hotspot, it takes specific time for a user to operate a terminal device to initiate access to the Wi-Fi hotspot of the access point.

In this period of time, the Wi-Fi hotspot of the access point does not need to detect data sent by the terminal device by using the Wi-Fi hotspot. Therefore, after the access point enables the Wi-Fi hotspot, the access point may immediately enable the Wi-Fi low power consumption mode, to reduce power consumption generated by the Wi-Fi hotspot in a period of time in which the terminal device does not initiate access.

S502. The access point receives a Wi-Fi hotspot access request.

The Wi-Fi hotspot access request is a request that is sent by the terminal device to the access point and that requests to access the Wi-Fi hotspot.

In a possible implementation, the Wi-Fi hotspot access request is an (authentication, AUTH) frame sent by the terminal device to the access point.

S503. The access point disables the Wi-Fi low power consumption mode.

Specifically, after the access point receives the Wi-Fi hotspot access request sent by the terminal device, the access point and the terminal device need to perform signaling interaction by using the Wi-Fi hotspot, to determine whether to allow the terminal device to access the Wi-Fi hotspot of the access point.

In this case, to ensure a success rate of accessing the Wi-Fi hotspot by the terminal device and reduce a delay of accessing the Wi-Fi hotspot by the terminal device, the access point disables the Wi-Fi low power consumption mode, to avoid a problem that the terminal device fails to access the Wi-Fi hotspot because the access point in a sleep state cannot perform signaling interaction with the terminal device, or a problem of a high delay of accessing the Wi-Fi hotspot by the terminal device.

S504. The access point associates with the terminal device.

A process in which the access point associates with the terminal device is a process in which the terminal device accesses the Wi-Fi hotspot of the access point.

In the process in which the access point associates with the terminal device, if the terminal device supports the Wi-Fi low power consumption mode, the terminal device sends a low power consumption support frame to the access point.

S505. If the access point fails to associate with the terminal device, the access point enables the Wi-Fi low power consumption mode.

Specifically, if the access point fails to associate with the terminal device, there is still no terminal device that accesses the Wi-Fi hotspot of the access point. In this case, the access point enables the Wi-Fi low power consumption mode, to reduce power consumption generated by the Wi-Fi hotspot.

S506. If the access point successfully associates with the terminal device, the access point determines whether the terminal device supports the Wi-Fi low power consumption mode.

Specifically, the access point may determine, based on whether the low power consumption support frame of the terminal device is received, whether the terminal device supports the Wi-Fi low power consumption mode.

S507. When the terminal device does not support the Wi-Fi low power consumption mode, the access point disables the Wi-Fi low power consumption mode.

This can avoid a loss of a data packet of the terminal device caused when the terminal device sends data to the access point when the Wi-Fi hotspot is in the sleep state after the access point enables the Wi-Fi low power consumption mode.

S508. When the terminal device supports the Wi-Fi low power consumption mode, the access point enables the Wi-Fi low power consumption mode.

S509. The access point keeps the Wi-Fi low power consumption mode enabled until a new Wi-Fi hotspot access request is received.

Then, the terminal device performs S502 to S507 to determine whether to enable the Wi-Fi low power consumption mode.

In other words, when the access point enables the Wi-Fi low power consumption mode, if there is a new terminal device that requests to access the Wi-Fi hotspot, the access point disables the Wi-Fi low power consumption mode, associates with the new terminal device, and determines, based on an association result and whether the new terminal device supports the Wi-Fi low power consumption mode, whether to enable the Wi-Fi low power consumption mode.

S510. If there is a terminal device that is disconnected from the Wi-Fi hotspot of the access point, the access point determines whether there is a terminal device that accesses the Wi-Fi hotspot.

After determining that there is a terminal device that is disconnected from the Wi-Fi hotspot, the access point determines whether to continue to enable the Wi-Fi low power consumption mode.

S511. If there is the terminal device that is disconnected from the Wi-Fi hotspot, the access point keeps the Wi-Fi low power consumption mode enabled.

S512. If there is no terminal device that is disconnected from the Wi-Fi hotspot, the access point keeps the Wi-Fi low power consumption mode disabled.

In a possible implementation, the access point may display a first identifier when the Wi-Fi low power consumption mode is enabled. The first identifier represents that the access point enables the Wi-Fi low power consumption mode.

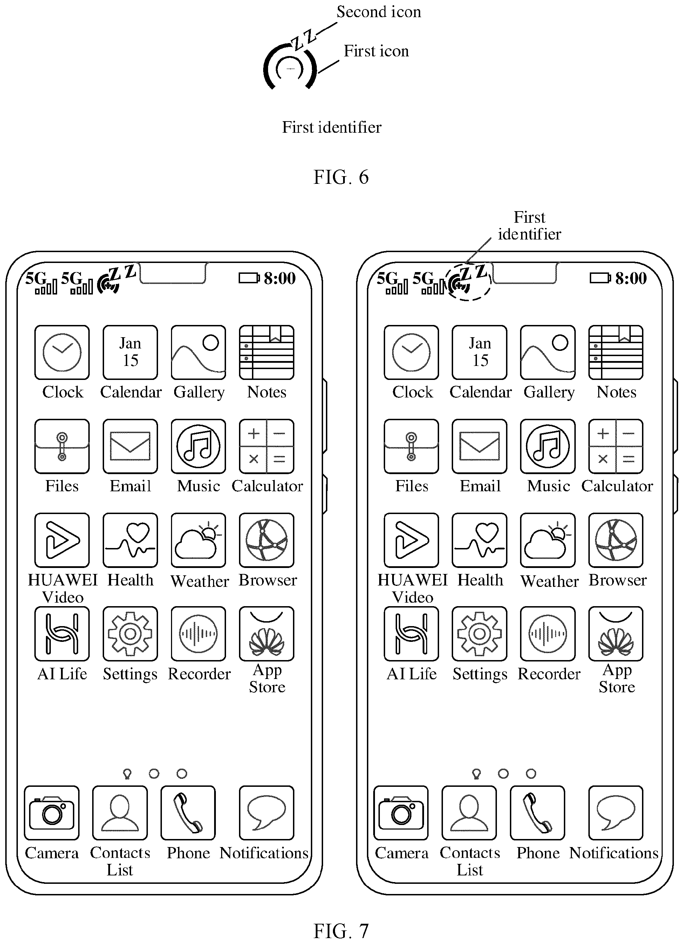

FIG. 6 is a schematic diagram of the first identifier. FIG. 7 is schematic interface diagrams of displaying the first identifier by the access point. The first identifier includes a first icon and a second icon, the first icon is a Wi-Fi hotspot icon, and the second icon is a Wi-Fi low power consumption mode icon.

Specifically, after a Wi-Fi chip of the access point performs one or more steps in S500 to S509, the Wi-Fi chip determines whether to enable the Wi-Fi low power consumption mode. If the Wi-Fi chip determines to enable the Wi-Fi low power consumption mode, the Wi-Fi chip generates fourth indication information. The Wi-Fi chip sends the fourth indication information to an SOC chip. The fourth indication information indicates the access point to display the first identifier.

After receiving the fourth indication information, the SOC chip indicates the access point to display the first identifier.

In an example, the SOC chip invokes a UI interface of the access point, and displays the first identifier on the UI interface of the access point.

In still another possible implementation, the access point may display a second identifier when the Wi-Fi low power consumption mode is disabled. The second identifier represents that the access point disables the Wi-Fi low power consumption mode.

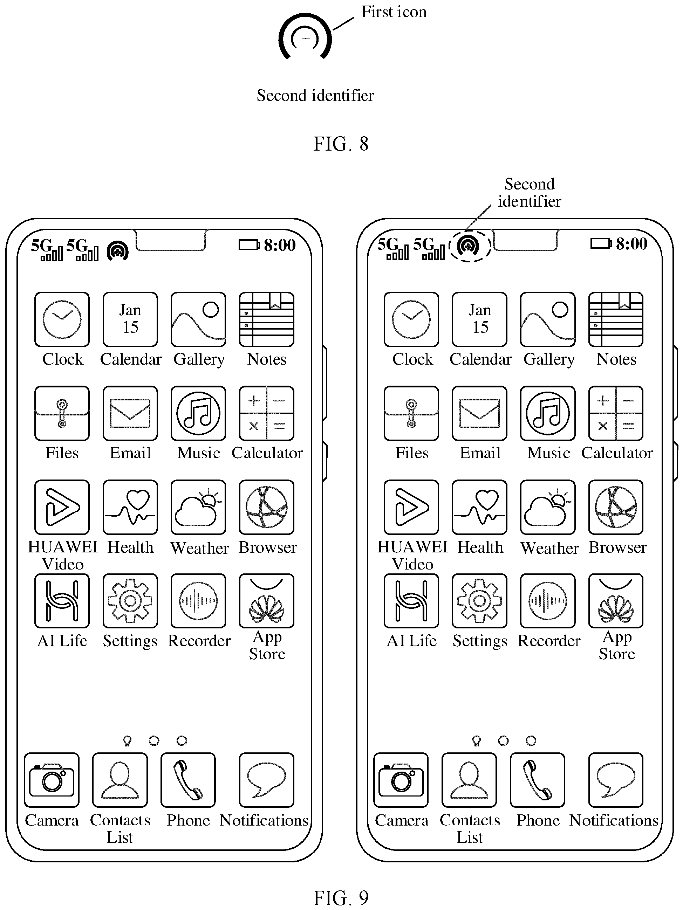

FIG. 8 is a schematic diagram of the second identifier. FIG. 9 is schematic interface diagrams of displaying the second identifier by the access point. The second identifier includes the first icon, and the first icon is the Wi-Fi hotspot icon.

Specifically, after the Wi-Fi chip of the access point performs one or more steps in S500 to S509, the Wi-Fi chip determines whether to enable the Wi-Fi low power consumption mode. If the Wi-Fi chip determines to disable the Wi-Fi low power consumption mode, the Wi-Fi chip generates fifth indication information. The Wi-Fi chip sends the fifth indication information to the SOC chip. The fifth indication information indicates the access point to display the second identifier.

After receiving the fifth indication information, the SOC chip indicates the access point to display the second identifier.

In an example, the SOC chip invokes the UI interface of the access point, and displays the second identifier on the UI interface of the access point.

Based on the foregoing technical solutions, the access point may display a corresponding identifier on the UI interface based on whether the Wi-Fi low power consumption mode is enabled. This helps intuitively determine a state of the Wi-Fi hotspot of the access point based on the identifier displayed by the access point.

The solutions in the foregoing embodiments of this application may be combined on a premise that the solutions are not contradictory.

The foregoing mainly describes the solutions in embodiments of this application from a perspective of interaction between network elements. It may be understood that, to implement the foregoing functions, the network elements such as the access point and the terminal device include at least one of a corresponding hardware structure and a software module for performing the functions. A person skilled in the art should be easily aware that, with reference to units and algorithm steps in the examples described in embodiments disclosed in this specification, this application can be implemented in a form of hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, functional units of the access point and the terminal device may be divided based on the foregoing method examples. For example, each functional unit may be obtained through division based on a corresponding function, or two or more functions may be integrated into one processing unit. The integrated unit may be implemented in a form of hardware, or may be implemented in a form of a software functional unit. It should be noted that, in embodiments of this application, division into the units is an example and is merely a logical function division, and may be other division in actual implementation

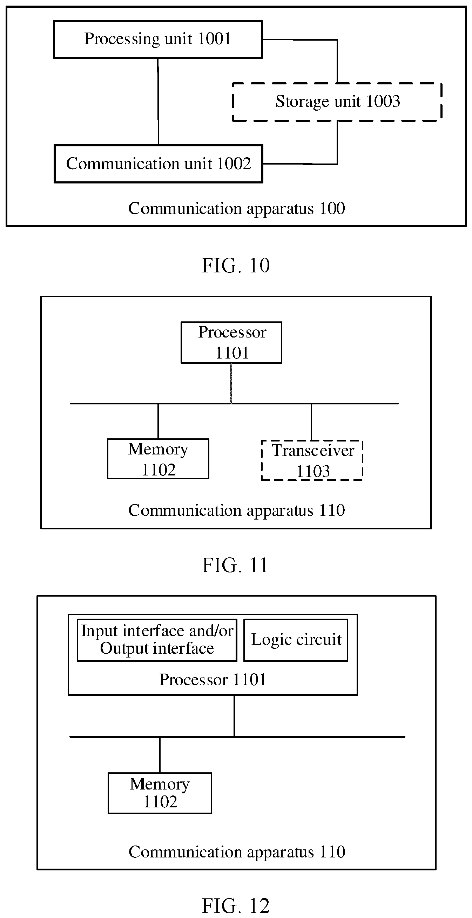

When an integrated unit is used, FIG. 10 is a schematic diagram of a possible structure of a communication apparatus (denoted as a communication apparatus 100) in the foregoing embodiments. The communication apparatus 100 includes a processing unit 1001 and a communication unit 1002, and may further include a storage unit 1003. The schematic diagram of the structure shown in FIG. 10 may be used to show structures of the access point and the terminal device in the foregoing embodiments.

When the schematic diagram of the structure shown in FIG. 10 is used to show the structure of the access point in the foregoing embodiments, the processing unit 1001 is configured to control and manage an action of the access point, for example, control the access point to perform S300 to S303 in FIG. 3, S500 to S512 in FIG. 5, and/or an action performed by the access point in another process described in embodiments of this application. The processing unit 1001 may communicate with another network entity by using the communication unit 1002, for example, communicate with the access point shown in FIG. 1. The storage unit 1003 is configured to store program code and data of the access point.

When the schematic diagram of the structure shown in FIG. 10 is used to show the structure of the access point in the foregoing embodiments, the communication apparatus 100 may be an access point, or may be a chip in the access point.

When the schematic diagram of the structure shown in FIG. 10 is used to show the structure of the terminal device in the foregoing embodiments, the processing unit 1001 is configured to control and manage an action of the terminal device, for example, control the terminal device to perform S301 and S302 in FIG. 3, S502, S504, and S509 in FIG. 5, and/or an action performed by the terminal device in another process described in embodiments of this application. The processing unit 1001 may communicate with another network entity by using the communication unit 1002, for example, communicate with the terminal device shown in FIG. 1. The storage unit 1003 is configured to store program code and data of the terminal device.

When the schematic diagram of the structure shown in FIG. 10 is used to show the structure of the terminal device in the foregoing embodiments, the communication apparatus 100 may be a terminal device, or may be a chip in the terminal device.

When the communication apparatus 100 is the terminal device or the access point, the processing unit 1001 may be a processor or a controller, and the communication unit 1002 may be a communication interface, a transceiver, a transceiver, a transceiver circuit, a transceiver apparatus, or the like. The communication interface is a general term, and may include one or more interfaces. The storage unit 1003 may be a memory. When the communication apparatus 100 is the chip in the terminal device or the access point, the processing unit 1001 may be a processor or a controller, and the communication unit 1002 may be an input interface and/or an output interface, a pin, a circuit, or the like. The storage unit 1003 may be a storage unit (for example, a register or a cache) in the chip, or may be a storage unit (for example, a read-only memory (read-only memory, ROM for short) or a random access memory (random access memory, RAM for short)) that is in the terminal device or the access point and that is located outside the chip.

The communication unit may also be referred to as a transceiver unit. An antenna and a control circuit that have receiving and sending functions in the communication apparatus 100 may be considered as the communication unit 1002 in the communication apparatus 100, and a processor that has a processing function may be considered as the processing unit 1001 in the communication apparatus 100. Optionally, a component configured to implement a receiving function in the communication unit 1002 may be considered as a receiving unit. The receiving unit is configured to perform a receiving step in embodiments of this application. The receiving unit may be a receiver, a receiver, a receiver circuit, or the like.

When an integrated unit in FIG. 10 is implemented in a form of a software functional module and sold or used as an independent product, the integrated unit may be stored in a computer-readable storage medium. Based on such an understanding, the technical solutions of embodiments of this application essentially, or the part contributing to the current technology, or all or some of the technical solutions may be implemented in the form of a software product. The computer software product is stored in a storage medium and includes several instructions for instructing a computer device (which may be a personal computer, a server, or a network device) or a processor (processor) to perform all or some of the steps of the methods described in embodiments of this application. The storage medium for storing the computer software product includes: any medium that can store program code, such as a USB flash drive, a removable hard disk, a read-only memory, a random access memory, a magnetic disk, or an optical disc.

A unit in FIG. 10 may alternatively be referred to as a module. For example, a processing unit may be referred to as a processing module.

An embodiment of this application further provides a schematic diagram of a hardware structure of a communication apparatus (denoted as a communication apparatus 110). Refer to FIG. 11 or FIG. 12. The communication apparatus 110 includes a processor 1101, and optionally, further includes a memory 1102 connected to the processor 1101.

In a first possible implementation, as shown in FIG. 11, the communication apparatus 110 further includes a transceiver 1103. The processor 1101, the memory 1102, and the transceiver 1103 are connected through a bus. The transceiver 1103 is configured to communicate with another device or a communication network. Optionally, the transceiver 1103 may include a transmitter and a receiver. A component configured to implement a receiving function in the transceiver 1103 may be considered as a receiver. The receiver is configured to perform a receiving step in embodiments of this application. A component configured to implement a sending function in the transceiver 1103 may be considered as a transmitter. The transmitter is configured to perform a sending step in embodiments of this application.

Based on the first possible implementation, the schematic diagram of the structure shown in FIG. 11 may be used to show a structure of the access point or the terminal device in the foregoing embodiments.

When the schematic diagram of the structure shown in FIG. 11 is used to show the structure of the access point in the foregoing embodiments, the processor 1101 is configured to control and manage an action of the access point. For example, the processor 1101 is configured to support the access point in performing S300 to S303 in FIG. 3, S500 to S512 in FIG. 5, and/or an action performed by the access point in another process described in embodiments of this application. The processor 1101 may communicate with another network entity by using the transceiver 1103, for example, communicate with the terminal device shown in FIG. 1. The memory 1102 is configured to store program code and data of the access point.

When the schematic diagram of the structure shown in FIG. 11 is used to show the structure of the terminal device in the foregoing embodiments, the processor 1101 is configured to control and manage an action of the terminal device. For example, the processor 1101 is configured to support the terminal device in performing S301 and S302 in FIG. 3, S502, S504, and S509 in FIG. 5, and/or an action performed by the terminal device in another process described in embodiments of this application. The processor 1101 may communicate with another network entity by using the transceiver 1103, for example, communicate with the access point shown in FIG. 1. The memory 1102 is configured to store program code and data of the terminal device.

In a second possible implementation, the processor 1101 includes a logic circuit and at least one of an input interface and an output interface. The output interface is configured to perform a sending action in a corresponding method, and the input interface is configured to perform a receiving action in the corresponding method.

Based on the second possible implementation, the schematic diagram of the structure shown in FIG. 12 may be used to show the structure of the access point or the terminal device in the foregoing embodiments.

When the schematic diagram of the structure shown in FIG. 12 is used to show the structure of the access point in the foregoing embodiments, the processor 1101 is configured to control and manage an action of the access point. For example, the processor 1101 is configured to support the access point in performing S300 to S303 in FIG. 3, S500 to S512 in FIG. 5, and/or an action performed by the access point in another process described in embodiments of this application. The processor 1101 may communicate with another network entity by using at least one of the input interface and the output interface, for example, communicate with the terminal device shown in FIG. 1. The memory 1102 is configured to store program code and data of the access point.

When the schematic diagram of the structure shown in FIG. 12 is used to show the structure of the terminal device in the foregoing embodiments, the processor 1101 is configured to control and manage an action of the terminal device. For example, the processor 1101 is configured to support the terminal device in performing S301 and S302 in FIG. 3, S502, S504, and S509 in FIG. 5, and/or an action performed by the terminal device in another process described in embodiments of this application. The processor 1101 may communicate with another network entity by using at least one of the input interface and the output interface, for example, communicate with the access point shown in FIG. 1. The memory 1102 is configured to store program code and data of the terminal device.

FIG. 11 and FIG. 12 may alternatively show a system chip in the terminal device. In this case, an action performed by the terminal device may be implemented by the system chip. For a specific action performed, refer to the foregoing descriptions. Details are not described herein again. FIG. 11 and FIG. 12 may alternatively show a system chip in the access point. In this case, an action performed by the access point may be implemented by the system chip. For a specific action performed, refer to the foregoing descriptions. Details are not described herein again.

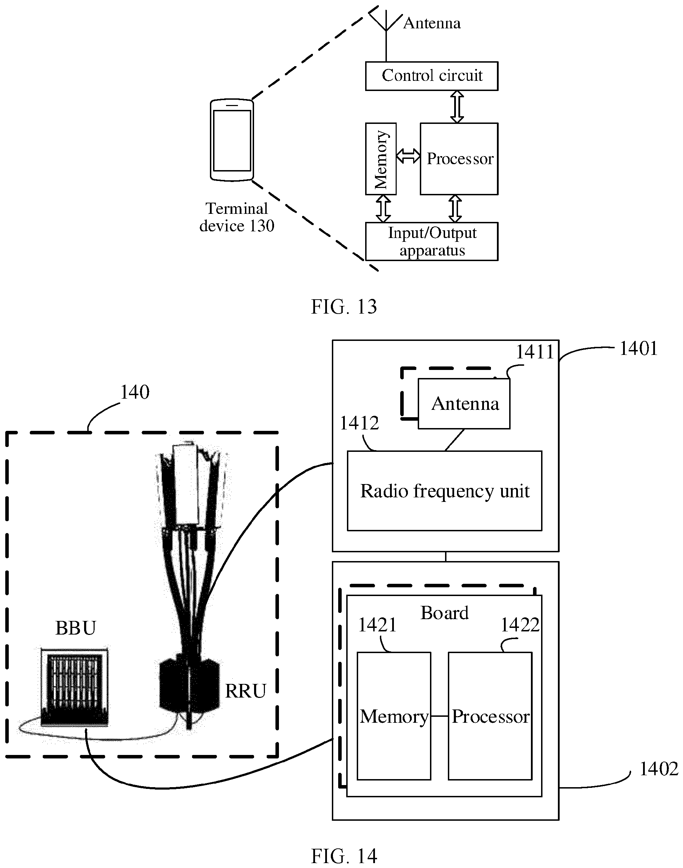

In addition, embodiments of this application further provide schematic diagrams of hardware structures of a terminal device (denoted as a terminal device 130) and a network device (denoted as a network device 140). For details, refer to FIG. 13 and FIG. 14 respectively.

FIG. 13 is the schematic diagram of the hardware structure of the terminal device 130. For ease of description, FIG. 13 shows only main components of the terminal device. As shown in FIG. 13, the terminal device 130 includes a processor, a memory, a control circuit, an antenna, and an input/output apparatus.

The processor is mainly configured to: process a communication protocol and communication data, control the entire terminal device, execute a software program, and process data of the software program, for example, control an access point to perform S300 to S303 in FIG. 3, S500 to S512 in FIG. 5, and/or an action performed by the access point in another process described in embodiments of this application, for another example, control the terminal device to perform S301 and S302 in FIG. 3, S502, S504, and S509 in FIG. 5, and/or an action performed by the terminal device in another process described in embodiments of this application. The memory is mainly configured to store the software program and data. The control circuit (which may also be referred to as a radio frequency circuit) is mainly configured to: perform conversion between a baseband signal and a radio frequency signal, and process the radio frequency signal. The control circuit and the antenna together may also be referred to as a transceiver, and are mainly configured to receive and send a radio frequency signal in a form of an electromagnetic wave. The input/output apparatus, such as a touchscreen, a display, or a keyboard, is mainly configured to: receive data input by a user and output data to the user.

After the terminal device is powered on, the processor may read the software program in the memory, interpret and execute instructions of the software program, and process the data of the software program. When the processor needs to send data through the antenna, after performing baseband processing on the to-be-sent data, the processor outputs a baseband signal to a control circuit in the control circuit. The control circuit performs radio frequency processing on the baseband signal and then sends a radio frequency signal to the outside in the form of the electromagnetic wave through the antenna. When data is sent to the terminal device, the control circuit receives a radio frequency signal through the antenna, converts the radio frequency signal into a baseband signal, and outputs the baseband signal to the processor. The processor converts the baseband signal into data, and processes the data.

A person skilled in the art may understand that, for ease of description, FIG. 13 shows only one memory and one processor. In an actual terminal device, there may be a plurality of processors and memories. The memory may also be referred to as a storage medium, a storage device, or the like. This is not limited in embodiments of this application.

In an optional implementation, the processor may include a baseband processor and a central processing unit. The baseband processor is mainly configured to process the communication protocol and the communication data. The central processing unit is mainly configured to control the entire terminal device, execute the software program, and process the data of the software program. The processor in FIG. 13 integrates functions of the baseband processor and the central processing unit. A person skilled in the art may understand that the baseband processor and the central processing unit may alternatively be independent processors, and are interconnected by using a technology such as a bus. A person skilled in the art may understand that the terminal device may include a plurality of baseband processors to adapt to different network standards, and the terminal device may include a plurality of central processing units to enhance processing capabilities of the terminal device, and components of the terminal device may be connected through various buses. The baseband processor may alternatively be expressed as a baseband processing circuit or a baseband processing chip. The central processing unit may alternatively be expressed as a central processing circuit or a central processing chip. A function of processing the communication protocol and the communication data may be built in the processor, or may be stored in the memory in a form of a software program, and the processor executes the software program to implement a baseband processing function.

FIG. 14 is a schematic diagram of the hardware structure of the network device 140. The network device 140 may include one or more radio frequency units, such as a remote radio unit (remote radio unit, RRU for short) 1401 and one or more baseband units (baseband units, BBUs for short) (which may also be referred to as digital units (digital units, DUs for short)) 1402.

The RRU 1401 may be referred to as a transceiver unit, a transceiver, a transceiver circuit, or a transceiver, and may include at least one antenna 1411 and a radio frequency unit 1412. The RRU 1401 is mainly configured to: send and receive a radio frequency signal, and perform conversion between a radio frequency signal and a baseband signal. The RRU 1401 and the BBU 1402 may be physically disposed together, or may be physically disposed separately, namely, a distributed base station.

The BBU 1402 is a control center of the network device, or may be referred to as a processing unit, and is mainly configured to complete baseband processing functions such as channel coding, multiplexing, modulation, and frequency spreading.

In an embodiment, the BBU 1402 may include one or more boards. A plurality of boards may jointly support a radio access network (such as an LTE network) of a single access standard, or may separately support radio access networks (such as an LTE network, a 5G network, or another network) of different access standards. The BBU 1402 further includes a memory 1421 and a processor 1422. The memory 1421 is configured to store necessary instructions and data. The processor 1422 is configured to control the network device to perform a necessary action. The memory 1421 and the processor 1422 may serve one or more boards. In other words, a memory and a processor may be disposed on each board. Alternatively, a plurality of boards may share a same memory and a same processor. In addition, a necessary circuit may further be disposed on each board.

It should be understood that, the network device 140 shown in FIG. 14 performs an action performed by the network device in embodiments of this application. Operations, functions, or operations and functions of modules in the network device 140 are separately set to implement corresponding procedures in the foregoing method embodiments. For details, refer to the descriptions in the foregoing method embodiments. To avoid repetition, detailed descriptions are properly omitted herein.

In an implementation process, the steps of the methods provided in embodiments may be completed by using a hardware integrated logic circuit in the processor, or by using instructions in a form of software. The steps of the method disclosed with reference to embodiments of this application may be directly performed by a hardware processor, or may be performed by a combination of hardware in the processor and a software module.

The processor in this application may include but is not limited to at least one of the following types: a central processing unit (central processing unit, CPU), a microprocessor, a digital signal processor (DSP), a microcontroller unit (microcontroller unit, MCU), or a computing device used for running software such as an artificial intelligence processor. Each computing device may include one or more cores used to execute software instructions to perform operations or processing. The processor may be an independent semiconductor chip, or may be integrated with another circuit into a semiconductor chip. For example, the processor may form a SoC (system on chip) with another circuit (such as a codec circuit, a hardware acceleration circuit, or various buses and interface circuits). Alternatively, the processor may be integrated into an ASIC as a built-in processor of the ASIC, and the ASIC integrated with the processor may be separately packaged, or may be packaged with another circuit. In addition to the core configured to execute software instructions to perform the operations or processing, the processor may further include a necessary hardware accelerator, for example, a field programmable gate array (field programmable gate array, FPGA), a PLD (programmable logic device), or a logic circuit that implements a dedicated logic operation.

The memory in embodiments of this application may include at least one of the following types: a read-only memory (read-only memory, ROM) or another type of static storage device that can store static information and instructions, a random access memory (random access memory, RAM) or another type of dynamic storage device that can store information and instructions, or an electrically erasable programmable read-only memory (Electrically erasable programmable read-only memory, EEPROM). In some scenarios, the memory may alternatively be a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium that can be used to carry or store expected program code in a form of an instruction or a data structure and that can be accessed by a computer. However, the memory is not limited thereto.

An embodiment of this application further provides a computer-readable storage medium, including instructions. When the instructions are run on a computer, the computer is enabled to perform any one of the foregoing methods.

An embodiment of this application further provides a computer program product including instructions. When the computer program product runs on a computer, the computer is enabled to perform any one of the foregoing methods.

An embodiment of this application further provides a communication system, including the foregoing access point and terminal device.

An embodiment of this application further provides a chip. The chip includes a processor and an interface circuit. The interface circuit is coupled to the processor. The processor is configured to run computer programs or instructions, to implement the foregoing methods. The interface circuit is used to communicate with another module other than the chip.

All or some of the foregoing embodiments may be implemented by software, hardware, firmware, or any combination thereof. When a software program is used to implement embodiments, all or some of embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD for short)), or the like.

Although this application is described with reference to embodiments, in a process of implementing this application that claims protection, a person skilled in the art may understand and implement another variation of the disclosed embodiments by viewing the accompanying drawings, disclosed content, and the appended claims. In the claims, "comprising" (comprising) does not exclude another component or another step, and "a" or "one" does not exclude a case of a plurality. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example descriptions of this application defined by the appended claims, and are considered as any of or all modifications, variations, combinations or equivalents that cover the scope of this application. It is clear that a person skilled in the art can make various modifications and variations to this application without departing from the spirit and scope of this application. This application is intended to cover these modifications and variations of this application provided that they fall within the scope of the claims of this application and their equivalent technologies.

In conclusion, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A wireless fidelity Wi-Fi communication method, comprising:
enabling, by an access point, a Wi-Fi hotspot;
selectively enabling, by the access point, a Wi-Fi low power consumption mode; and
in response to enabling the Wi-Fi low power consumption mode, periodically broadcasting, by the access point, a low power consumption indication frame, wherein the low power consumption indication frame carries a low power consumption parameter, and the low power consumption parameter indicates at least one discontinuous time period in which the access point is in a sleep state after entering the Wi-Fi low power consumption mode.

2. The method according to claim 1, wherein the selectively enabling, by the access point, a Wi-Fi low power consumption mode comprises:
selectively enabling, by the access point, the Wi-Fi low power consumption mode based on information about a terminal device that accesses the Wi-Fi hotspot.

3. The method according to claim 2, wherein the selectively enabling, by the access point, the Wi-Fi low power consumption mode based on information about a terminal device that accesses the Wi-Fi hotspot comprises:
when at least one terminal device accesses the Wi-Fi hotspot, determining, by the access point, whether the at least one terminal device supports the Wi-Fi low power consumption mode; and
enabling, by the access point, the Wi-Fi low power consumption mode if the one or more terminal devices all support the Wi-Fi low power consumption mode.

4. The method according to claim 3, wherein the determining, by the access point, whether the at least one terminal device supports the Wi-Fi low power consumption mode comprises:
determining, by the access point, whether a low power consumption support frame from each of the at least one terminal device is received, wherein the low power consumption support frame represents that the terminal device supports the Wi-Fi low power consumption mode; and
if the low power consumption support frame from each of the at least one terminal device is received, determining, by the access point, that the at least one terminal device supports the Wi-Fi low power consumption mode; or
if the low power consumption support frame from each of the at least one terminal device is not received, determining, by the access point, that the at least one terminal device comprises a terminal device that does not support the Wi-Fi low power consumption mode.

5. The method according to claim 1, wherein the selectively enabling, by the access point, a Wi-Fi low power consumption mode comprises:
enabling, by the access point, the Wi-Fi low power consumption mode when the access point is in a state in which the Wi-Fi hotspot is enabled and no terminal device accesses the Wi-Fi hotspot.

6. The method according to claim 5, wherein the method further comprises:
after the access point enables the Wi-Fi hotspot, if the access point receives no access request from the terminal device, determining that the access point is in the state in which the Wi-Fi hotspot is enabled and no terminal device accesses the Wi-Fi hotspot.

7. The method according to claim 5, wherein the method further comprises:
after one or more terminal devices that access the Wi-Fi hotspot are all disconnected from the Wi-Fi hotspot, determining that the access point is in the state in which the Wi-Fi hotspot is enabled and no terminal device accesses the Wi-Fi hotspot.

8. The method according to claim 1, wherein the selectively enabling, by the access point, a Wi-Fi low power consumption mode comprises:
generating, by the access point, forcible enabling information indicating to forcibly enable the Wi-Fi low power consumption mode; and
in response to the forcible enabling information, enabling, by the access point, the Wi-Fi low power consumption mode.

9. The method according to any one of claims 1 to 8, wherein after the enabling, by the access point, the Wi-Fi low power consumption mode, the method further comprises:
receiving, by the access point, a Wi-Fi hotspot access request from a terminal device that does not access the Wi-Fi hotspot; and
in response to the Wi-Fi hotspot access request, disabling, by the access point, the Wi-Fi low power consumption mode.

10. The method according to any one of claims 1 to 9, wherein duration of a plurality of discontinuous time periods is determined based on an amount of data transmitted between the access point and the terminal device in a preset time period.

11. The method according to any one of claims 1 to 10, further comprising:
in response to enabling the Wi-Fi low power consumption mode, displaying, by the access point, a first identifier on a user interface, wherein the first identifier represents that the Wi-Fi low power consumption mode has been enabled.

12. The method according to claim 11, wherein the first identifier comprises a first icon and a second icon, the first icon is a Wi-Fi hotspot icon, and the second icon is a Wi-Fi low power consumption mode icon.

13. The method according to any one of claims 1 to 12, wherein after the enabling, by the access point, the Wi-Fi low power consumption mode, the method further comprises:
disabling, by the access point, the Wi-Fi low power consumption mode.

14. The method according to claim 13, further comprising:
when the Wi-Fi low power consumption mode is disabled, displaying, by the access point, a second identifier, wherein the second identifier represents that the Wi-Fi low power consumption mode has been disabled.

15. The method according to claim 14, wherein the second identifier comprises the first icon, and the first icon is the Wi-Fi hotspot icon.

16. A wireless fidelity Wi-Fi communication method, comprising:
sending, by a terminal device, a low power consumption response frame to an access point, wherein a low power consumption support frame represents that the terminal device supports a Wi-Fi low power consumption mode, and the access point is an access point that enables a Wi-Fi hotspot;
receiving, by the terminal device, a low power consumption indication frame periodically broadcast by the access point, wherein the low power consumption indication frame carries a low power consumption parameter, and the low power consumption parameter indicates at least one discontinuous time period in which the access point is in a sleep state after entering the Wi-Fi low power consumption mode; and
sending, by the terminal device, data to the access point by using the Wi-Fi hotspot in a time period other than the at least one discontinuous time period.

17. The method according to claim 16, wherein the method further comprises:
sending, by the terminal device, a Wi-Fi hotspot access request to the access point.

18. A wireless fidelity Wi-Fi communication apparatus, comprising a Wi-Fi chip processor and a Wi-Fi chip transceiver, wherein the Wi-Fi chip processor is configured to enable a Wi-Fi hotspot;
the Wi-Fi chip processor is further configured to selectively enable a Wi-Fi low power consumption mode; and
the Wi-Fi chip processor is further configured to: in response to enabling the Wi-Fi low power consumption mode, indicate the Wi-Fi chip transceiver to periodically broadcast a low power consumption indication frame, wherein the low power consumption indication frame carries a low power consumption parameter, and the low power consumption parameter indicates at least one discontinuous time period in which an access point is in a sleep state after entering the Wi-Fi low power consumption mode.

19. The apparatus according to claim 18, wherein the Wi-Fi chip processor is specifically configured to:
selectively enable the Wi-Fi low power consumption mode based on information about a terminal device that accesses the Wi-Fi hotspot.

20. The apparatus according to claim 19, wherein the Wi-Fi chip processor is specifically configured to:
when at least one terminal device accesses the Wi-Fi hotspot, determine whether the at least one terminal device supports the Wi-Fi low power consumption mode; and
enable the Wi-Fi low power consumption mode if the one or more terminal devices all support the Wi-Fi low power consumption mode.

21. The apparatus according to claim 20, wherein the Wi-Fi chip processor is specifically configured to:
determine whether a low power consumption support frame from each of the at least one terminal device is received, wherein the low power consumption support frame represents that the terminal device supports the Wi-Fi low power consumption mode; and
if the low power consumption support frame from each of the at least one terminal device is received, determine that the at least one terminal device supports the Wi-Fi low power consumption mode; or
if the low power consumption support frame from each of the at least one terminal device is not received, determine that the at least one terminal device comprises a terminal device that does not support the Wi-Fi low power consumption mode.

22. The apparatus according to claim 18, wherein the Wi-Fi chip processor is specifically configured to:
enable the Wi-Fi low power consumption mode when the Wi-Fi communication apparatus is in a state in which the Wi-Fi hotspot is enabled and no terminal device accesses the Wi-Fi hotspot.

23. The apparatus according to claim 22, wherein the Wi-Fi chip processor is further configured to:
after the Wi-Fi hotspot is enabled, if no access request is received from the terminal device, determine that the Wi-Fi communication apparatus is in the state in which the Wi-Fi hotspot is enabled and no terminal device accesses the Wi-Fi hotspot.

24. The apparatus according to claim 22, wherein the Wi-Fi chip processor is further configured to:
after one or more terminal devices that access the Wi-Fi hotspot are all disconnected from the Wi-Fi hotspot, determine that the Wi-Fi communication apparatus is in the state in which the Wi-Fi hotspot is enabled and no terminal device accesses the Wi-Fi hotspot.

25. The apparatus according to claim 18, wherein the Wi-Fi chip processor is further configured to:
obtain forcible enabling information that is generated by the Wi-Fi communication apparatus and that indicates to forcibly enable the Wi-Fi low power consumption mode; and
in response to the forcible enabling information, enable the Wi-Fi low power consumption mode.

26. The apparatus according to any one of claims 18 to 25, wherein the Wi-Fi chip processor is further configured to:
receive a Wi-Fi hotspot access request from a terminal device that does not access the Wi-Fi hotspot; and
in response to the Wi-Fi hotspot access request, disable the Wi-Fi low power consumption mode.

27. The apparatus according to any one of claims 18 to 26, wherein duration of a plurality of discontinuous time periods is determined based on an amount of data transmitted between the access point and the terminal device in a preset time period.

28. The apparatus according to any one of claims 18 to 27, wherein the apparatus further comprises a system on chip SOC chip processor and an SOC chip transceiver, wherein
the SOC chip transceiver is configured to receive Wi-Fi low power consumption mode enabling information; and
the SOC chip processor is configured to: in response to enabling the Wi-Fi low power consumption mode, display a first identifier on a user interface, wherein the first identifier represents that the Wi-Fi low power consumption mode has been enabled.

29. The apparatus according to claim 28, wherein the first identifier comprises a first icon and a second icon, the first icon is a Wi-Fi hotspot icon, and the second icon is a Wi-Fi low power consumption mode icon.

30. The apparatus according to any one of claims 18 to 29, wherein the Wi-Fi chip processor is further configured to:
disable the Wi-Fi low power consumption mode.

31. The apparatus according to claim 30, wherein the SOC chip processor is further configured to:
when the Wi-Fi low power consumption mode is disabled, display a second identifier on the user interface, wherein the second identifier represents that the Wi-Fi low power consumption mode has been disabled.

32. The apparatus according to claim 31, wherein the second identifier comprises the first icon, and the first icon is the Wi-Fi hotspot icon.

33. A communication apparatus, comprising a transceiver and a processor, wherein
the transceiver is configured to send a low power consumption mode indication frame to an access point, wherein the low power consumption mode indication frame indicates that a terminal device supports a Wi-Fi low power consumption mode, and the access point is an access point that enables a Wi-Fi hotspot;
the transceiver is further configured to receive a low power consumption indication frame periodically broadcast by the access point, wherein the low power consumption indication frame carries a low power consumption parameter, and the low power consumption parameter indicates at least one discontinuous time period in which the access point is in a sleep state after entering the Wi-Fi low power consumption mode; and
the processor is configured to send data to the access point by using the Wi-Fi hotspot in a time period other than the at least one discontinuous time period.

34. The apparatus according to claim 33, wherein the transceiver is further configured to:
send a Wi-Fi hotspot access request to the access point.
Low power consumption support frame low power consumption support frame low power consumption support frame.

35. A computer-readable storage medium, wherein the computer-readable storage medium comprises a computer program or instructions, and when the computer program or the instructions is/are run on a computer, the computer is enabled to perform the method according to any one of claims 1 to 15, or the computer is enabled to perform the method according to claim 16 or 17.

36. A computer program product, wherein when the computer program product runs on a computer, the computer is enabled to perform the method according to any one of claims 1 to 15, or the computer is enabled to perform the method according to claim 16 or 17.
